# EUROPÄISCHE PATENTANMELDUNG

(11) **EP 2 502 894 A1**
(43) Veröffentlichungstag der Anmeldung: **26.09.2012**
(21) Anmeldenummer: 12153659.3
(22) Anmeldetag: 02.02.2012
(51) Int. Cl.: C04B 40/06, C04B 28/02, C04B 28/08, C04B 28/10, C04B 28/14, C04B 40/00

(54) **Gebinde sowie dessen Verwendung zur Herstellung von mineralischen wasserhaltigen Frischmörteln**

(30) Priorität: 24.03.2011 DE 102011014975
(71) Anmelder: Fels-Werke GmbH, 38640 Goslar (DE)
(72) Erfinder: Pankatz, Patric, 38835 Zilly (DE); Boenkendorf, Ulf Dr., 31188 Holle (DE); Stumpf, Thomas Dr., 38667 Bad Harzburg (DE)
(74) Vertreter: Solf, Alexander

(57) **Zusammenfassung**

Die Erfindung betrifft ein verschlossenes, gewichtsmäßig von einer Person tragbares Gebinde aus einem handhabbaren Transportbehältnis als Verpackung, vollgefüllt mit mineralischem Baustoffmaterial in Form von vorgefertigtem, mineralischem, nur noch mit Wasser und ggf. einem Zusatzmittel anzumachenden Werktrockenmörtel als Packgut, wobei das Transportbehältnis ein mit einer hermetischen Verschließeinrichtung verschlossener wasserdichter und insbesondere auch luftdichter Spritzbeutel ist und das Packgut aus ein mit Wasser reagierendes Sprengmittel enthaltenden Press- oder Aufbaugranulatkörnern der Werktrockenmischung besteht, die im Spritzbeutel Zwickelräume bilden sowie dessen Verwendung zur Herstellung von mineralischen wasserhaltigen Frischmörteln.

## Beschreibung

Die Erfindung betrifft ein Gebinde sowie dessen Verwendung zur Herstellung von mineralischen wasserhaltigen Frischmörteln aus vorgefertigten Werktrockenmörteln.

Mineralische Werktrockenmörtel werden in einem Mörtelwerk aus vorbestimmten, u. a. feinteiligen und gröberen Bestandteilen wie feinteiligen Bindemitteln und feinteiligen Zusatzstoffen und feinteiligen und gröberen Zuschlagstoffen sowie Zusatzmitteln in vorbestimmten Mengen zusammengemischt, als Gebinde abgepackt und auf den Markt gebracht. Ein Gebinde im Sinne der Erfindung ist die Gesamtheit aus Packgut in vorbestimmter vereinheitlichter Menge, im vorliegenden Fall aus Werktrockenmörtel, und aus der Verpackung selbst als Transportbehälter.

Auf der Baustelle wird der Werktrockenmörtel entpackt, in ein Gefäß z. B. in einen Kübel oder Trog oder Eimer geschüttet, mit Wasser versetzt und mit Mischaggregaten bzw. Rühraggregaten meist maschinell intensiv zu einem geschmeidigen Frischmörtel angerührt, der je nach Verwendungsart, z. B. als Dünnbett- oder Dickbettmörtel eine bestimmte Viskosität aufweisen soll.

Zur Vermeidung von Staubentwickung bei der Verarbeitung von Werktrockenmörteln ist aus der DE 102 33 833 A1 bekannt, aus pulverförmigen Werktrockenmörtelmischungen Presslinge unter Verwendung von Presshilfsmitteln und Sprengmitteln zu erzeugen, die entweder als Trockenmittelformkörper in ihrer gepressten Form oder als aus Trockenmittelformkörper gebrochene Presslinge verwendet werden. Auf der Baustelle werden die kompaktierten Presslinge ebenso wie die feinteiligen staubenden Werktrockenmörtel in ein Gefäß z. B. eine Wanne, einen Trog oder einen Eimer geschüttet, mit Wasser versetzt und mit Mischaggregaten oder Rühraggregaten bearbeitet, bis die gewünschte Konsistenz vorliegt. Dabei sorgen die Sprengmittel in den Presslingen für einen schnellen Zerfall der Presslinge. Die Größe der Presslinge liegt z. B. zwischen 40 und 50 mm. Werktrockenmörtel dieser Art werden auch in der DE 10 2009 057 710.6 beschrieben.

Es hat sich einerseits gezeigt, dass nach dem Einbringen der trockenen Presslinge in das Anmachgefäß und anschließender Wasserzugabe Zonen der Schüttung der Presslinge, die zuerst mit Wasser in Berührung kommen, Verklumpungen erzeugen können, die die Wasserverteilung behindern und erhöhte Rührenergie mit Rühraggregaten zur Homogenisierung der Viskosität der Frischmörtelmasse im Rührgefäß erfordern. Wird andererseits Wasser im Rührgefäß vorgelegt, dann treten ebenfalls unterschiedliche Viskositätszonen in der Frischmörtelmasse auf, die mit Rührenergie von Rühraggregaten beseitigt werden müssen.

Aufgabe der Erfindung ist, eine Einrichtung und deren Verwendung zu entwickeln, mit denen ohne Rühr- oder Mischaggregate auf einfache Weise aus Werktrockenmörtelpresslingen bezüglich Viskosität homogene Frischmörtel gewährleistet werden können.

Diese Aufgabe wird durch die Merkmale der Ansprüche 1 und 14 gelöst. Vorteilhafte Weiterbildungen der Erfindung werden in den von diesen Ansprüchen abhängigen Ansprüchen gekennzeichnet.

Die Erfindung sieht vor, für ein Gebinde und die Zubereitung bzw. das Anmachen eines Frischmörtels aus Werktrockenmörtelgranulaten, z. B. aus Aufbaugranulaten einer Teller- oder Trommelgranulation, insbesondere aber aus Pressgranulaten in Form von Werktrockenmörtelpresslingen einen Spritzbeutel aus flexiblem kollabierbarem wasserdichtem, vorzugsweise durchsichtigem Material, z. B. aus Kunststoff zu verwenden, wobei das Gebinde im hermetisch und fest verschlossenen Spritzbeutel die Aufbaugranulate oder insbesondere Werktrockenmörtelpresslinge enthält. Im Folgenden werden auch die Aufbaugranulate - eine Definition für Aufbaugranulate ist z. B. in der EP 1 118 642 A2 enthalten - nur noch mit Werktrockenmörtelpresslinge bezeichnet, die bevorzugt im Rahmen der Erfindung verwendet werden. Durch Öffnen des Spritzbeutels an seiner Einfüllöffnung und Einfüllen von Wasser in den Spritzbeutel kann das Wasser durch den Zwickelraum zwischen den Presslingskörnern nahezu ungehindert frei nach unten fließen und erreicht auch die untersten Körner im Auslass- oder Trichterbereich des Spritzbeutels unmittelbar. Aufgrund der Raumform des Spritzbeutels wird eine sehr schnelle und gleichmäßige Wasserverteilung im gesamten Volumen des Spritzbeutels erreicht, woraus eine nahezu gleichzeitige Reaktion des Sprengmittels der Presslingskörner im gesamten gefüllten Volumen des Spritzbeutel erfolgt und eine schnelle Entwicklung des Frischmörtels mit homogener Viskosität im gesamten gefüllten Volumen des Spritzbeutels resultiert, ohne dass gerührt werden muss. Die Entwicklung des Frischmörtels kann durch hermetisches Verschließen der Öffnung des Spritzbeutels von Hand nach der Wasserzugabe positiv unterstützt werden. Gleichermaßen kann die Entwicklung des Frischmörtels auch durch Kneten des verschlossenen Spritzbeutels mit den Händen von außen unterstützt werden; das ist aber nicht unbedingt erforderlich. Es ist darauf zu achten, dass nach der Wasserzugabe gegebenenfalls sich entwickelnde Gase zunächst ungehindert aus dem Spritzbeutel entweichen können. Danach kann die Einfüllöffnung des Spritzbeutels wieder geschlossen werden.

Spritzbeutel werden in der Regel für die Dekoration von Backwaren, Süßwaren oder Lebensmitteln mit viskosen Pasten gefüllt verwendet, wobei die Pasten als vorgefertigte viskose Massen in Spritzbeutel abgefüllt werden (DE 60 2005 000 847 T2). In dieser Druckschrift ist erwähnt, dass Spritzbeutel auch für andere Zwecke wie beispielsweise zum Aufbringen von Klebstoff, Zement, Mörtel, Gießkomponenten oder ähnlichem eingesetzt werden. Derartige Spritzbeutel kann man auch als Dosierbeutel bezeichnen.

In allen bekannten Fällen dient der Spritzbeutel lediglich als Dosier- bzw. Auftragsgerät und nicht als Transportbehälter oder Gebinde für vorgefertigte bereits pastöse Fluide. Im Rahmen der Erfindung wird der Spritzbeutel als Gebindebestandteil und seine Raumform als Mischaggregat und Auftragsdosieraggregat verwendet. Die Verwendung eines Spritzbeutels für grobkörniges trockenes Gut wie Trockenmörtelpresslinge ist insofern widersinnig, weil die Entleerung des Spritzbeutels am Spritzbeutelauslass für solches Gut nicht geschaffen ist.

Der synergistische Effekt, der aus der Verwendung des Spritzbeutels resultiert, ist, dass der Spritzbeutel nicht nur als Gebindeverpackung, sondern auch gleichzeitig als Mischgefäß und/oder Mischaggregat beim Kneten des Beutels und/oder Auftragseinrichtung für den im Spritzbeutel erzeugten Frischmörtel dient, indem in der üblichen Weise und an der üblichen Stelle eine Öffnung im oben wieder geschlossenen Spritzbeutel vorgesehen ist oder wird, durch die der Frischmörtel gepresst und auf einen Stein oder eine aufgehende Mauer aus Steinen aufgebracht werden kann.

Bei der Verwirklichung der Erfindung ist der für das Wasser zur Verfügung stehende Zwickelraum zwischen den Körnern der Trockenmörtelpresslingsschüttung im Spritzbeutel in Abhängigkeit vom gesamten Volumen der Schüttung zu optimieren, ebenso in Abhängigkeit von der Raumform des Spritzbeutels und der Raumform der Körner der Presslinge. Die Optimierungen, die auch von der Korngröße und Kornverteilung der Trockenmörtelpresslinge abhängig sind, kann man durch einfache Testversuche ermitteln, so dass gewährleistet ist, dass das zugeschüttete Wasser nahezu ungehindert bzw. nahezu widerstandslos und unmittelbar bis zur Spitze bzw. zum Auslass des Spritzbeutels vordringen kann.

Ein Spritzbeutel ist bekanntlich ein befüllbarer dünnwandiger kollabierbarer, zumindest auslassseitig sich verjüngender z. B. trichterförmiger oder keilförmiger oder pyramidenförmiger Beutel aus flexiblem, für die Zwecke der Erfindung wasserundurchlässigen Material, z. B. aus Kunststofffolie, der ein oberes offenes Ende als Füllöffnung und ein sich verjüngendes unteres Ende mit verringertem Querschnitt, das in einer Auslassöffnung ausläuft, die z. B. mit einer Tülle bestückt sein kann, aufweist. Derartige Spritzbeutel können im Rahmen der Erfindung verwendet werden.

Der Beutel wird üblicherweise mit plastischer Masse befüllt, jedoch nicht völlig, sondern es wird nur so viel Masse eingefüllt, dass die Füllöffnung mit der Beutelfolie im Einfüllbereich geschlossen werden kann, so dass keine plastische Masse entweichen kann. Nach dem Verschließen und anschließenden Öffnen der Auslassöffnung kann durch Presskraft von Hand von außen auf den gefüllten flexiblen Beutel die Masse über die Auslassöffnung nach außen gedrückt werden, wobei der Beutel kollabiert.

Die Raumformen von Spritzbeuteln können unterschiedlich sein. Insbesondere kann der Anteil und die Raumform des sich verjüngenden Bereichs z. B. des Trichterbereichs an der gesamten Beutellänge unterschiedlich ausgeführt sein. Verschiedene Raumformen ergeben sich z. B. aus folgenden Druckschriften: US 2003/0091702 A1, CH 270 816 C, DE 60 2005 000 847 T2, US 4,205,765 C. Meist ist die Raumform der Spritzbeutel spitztütenförmig. Je nach Anwendungserfordernis kann die Raumform aber auch rundschläuchig sein oder der Schlauch kann eckig, z. B. viereckig sein, jeweils aber mit sich verjüngenden Auslauf- bzw. Auspressendbereichen. Die Verjüngung kann z. B. trichterförmig, kegelförmig oder pyramidenförmig oder keilförmig sein. Alle diese Ausführungsformen sind für die Zwecke der Erfindung verwendbar.

Erfindungsgemäß werden derartige Spritzbeutel zur Herstellung eines Gebindes verwendet, indem sie z. B. maschinell mit Werktrockenmörtelpresslingen soweit gefüllt werden, dass das obere Ende des Spritzbeutels im Bereich der Spritzbeuteleinfüllöffnung zum hermetischen z. B. maschinellen Verschließen des Spritzbeutels verwendet werden kann. Anschließend an das Befüllen erfolgt das hermetische dauerhafte feste Verschließen z. B. durch Aufeinanderfalten der Wandungen des Einfüllöffnungsbereichs des Spritzbeutels auf der Oberfläche der Schüttung Werktrockenmörtelpresslinge und Versiegeln der Aufeinanderfaltungen miteinander, z. B. durch Verschweißen der Falten. Das Verschließen kann zweckmäßigerweise auch durch Clipsen mit einem oder mehreren Clips oder Verklammern mit einer oder mehreren Klammern erfolgen.

Hermetisches Verschließen im Sinne der Erfindung meint ein wasser- und luftdichtes sowie auch staubdichtes Verschließen des Einfüllöffnungsbereichs des Spritzbeutels. Dauerhaft und fest meint, dass sich der Spritzbeutel nicht selbsttätig öffnen kann bei der Handhabung des Gebindes, z. B. beim Tragen und Transportieren oder Stapeln. Vorzugsweise ist der Verschlussbereich reiß- und bruchfester als der Mantelbereich des Spritzbeutels.

Dauerhaft und fest meint somit, dass die Verschließeinrichtung zweckmäßigerweise so ausgeführt wird, dass das Gebinde ohne weiteres gehandhabt werden kann, z. B. gestapelt und versendet und gelagert werden kann, ohne dass die Verschließeinrichtung sich selbsttätig öffnet. Gleichwohl ist die Verschließeinrichtung so ausgeführt, dass sie vorzugsweise zerstörungsfrei, d. h. ohne Spritzbeutelmaterialzerstörung oder nahezu zerstörungsfrei von Hand geöffnet und eine Öffnung und ein Einfüllraum oberhalb des Packguts gebildet werden kann, so dass in das geöffnete Gebinde Wasser gegossen werden kann. Danach kann der Spritzbeutel in bekannter Weise von Hand wieder hermetisch verschlossen werden z. B. durch Zusammendrehen bzw. Verdrillen oder Zusammenfalten oder Zusammenschnüren oder Zusammenrollen oder dergleichen seines oberen Endbereichs oberhalb der Schüttung, woraus ein Verschluss eingerichtet wird und vorzugsweise oberhalb der Schüttung bzw. Füllung kein Freiraum verbleibt.

Das Wiederverschließen des Spritzbeutels wird so bewerkstelligt, dass beim Herauspressen des Frischmörtels aus dem Spritzbeutel durch die untere Öffnung kein Frischmörtel oben aus dem Spritzbeutel entweichen kann.

Das Entleeren des Spritzbeutels nach dem Selbstmischvorgang erfolgt, indem das Auslassende des Spritzbeutels gekappt wird oder, wenn ein Spritzbeutel mit mindestens einer verschließbaren Öffnung oder Tülle oder Düse für das Gebinde verwendet worden ist, durch Öffnen der Öffnung oder der Tülle oder Düse und jeweils Herauspressen des Frischmörtels von außen von Hand aus dem Spritzbeutel. Insofern dient der Spritzbeutel nicht nur als Gebindebestandteil und Mischaggregat sondern auch als Auftragsgerät für den Frischmörtel.

Es liegt aber auch im Rahmen der Erfindung, den Frischmörtel nach dem Selbstmischvorgang aus dem Spritzbeutel bzw. durch die obere Einfüllöffnung zu entleeren und z. B. den Frischmörtel in einen Mörtelschlitten zu geben, mit dem der Frischmörtelauftrag auf einen Stein oder auf eine aufgehende Mauer in bekannter Weise erfolgt. In diesem Fall dient der Spritzbeutel lediglich als Gebindebestandteil und als Mischaggregat.

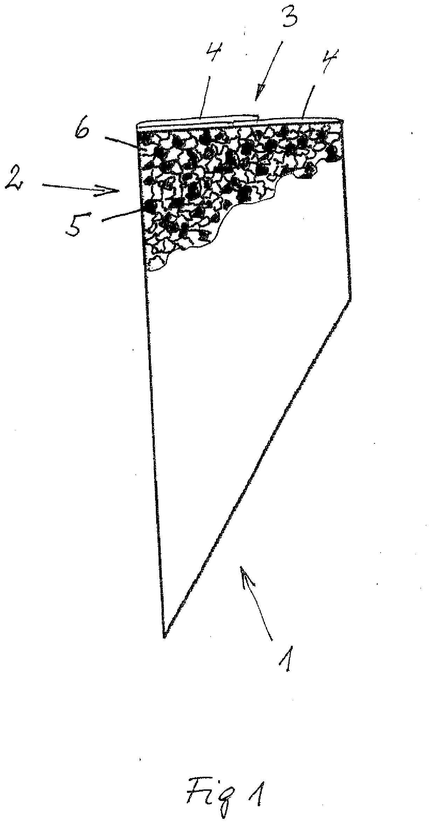

Fig. 1 zeigt schematisch in einer Seitenansicht eine Raumform eines z. B. 5 I fassenden geschlossenen erfindungsgemäßen Spritzbeutelgebindes. Der Querschnitt kann rund sein. Dann läuft das untere Ende 1 in einem Spitzkegel aus; oder der Querschnitt ist eckig, z. B. viereckig, dann läuft das untere Ende 1 keilförmig aus. Am oberen Ende 2 befindet sich die Verschlusseinrichtung 3, die das vorzugsweise hermetische Verschließen gewährleistet und üblich die Handhabung eines Trockenmörtelgebindes ohne weiteres ertragen kann. Die Verschlusseinrichtung 3 wird z. B. durch aufeinander gefaltete und miteinander verschweißte Wandungsteilbereiche 4 gebildet. Das Gebinde enthält die Körner 5 des Trockenmörtelpresslingsgranulats bzw. der Trockenmörtelpresslingsschüttung, wobei zwischen den Körnern 5 Zwickelräume 6 für die Aufnahme von Wasser vorgesehen sind. Die Zwickelräume werden insbesondere durch die Größe, die Raumform und Kornverteilung der Körner 5 gewährleistet.

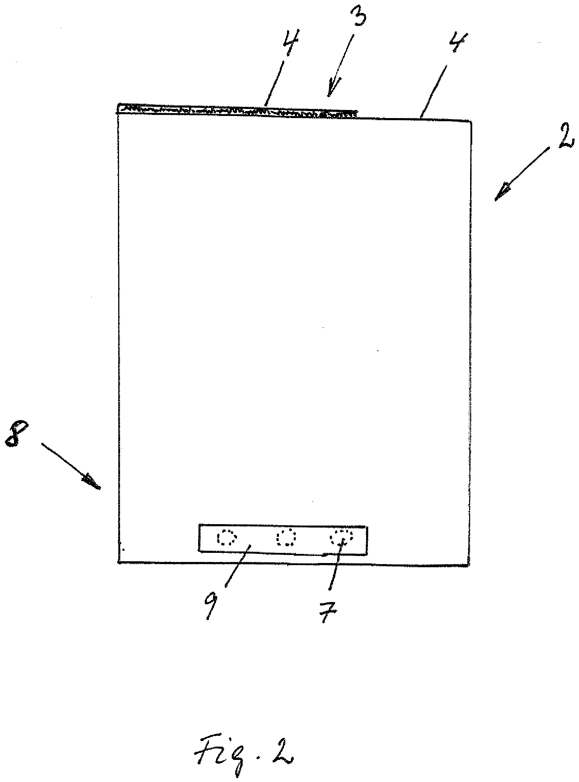

Fig. 2 zeigt ein Gebinde 1 schematisch in einer Frontansicht mit einem unteren, verjüngten Auslassbereich 8, der mindestens eine Auslassöffnung 7 aufweist, die mit einem außenseitigen, am Spritzbeutel haftenden Streifen, z. B. einem Klebestreifen 9, verschlossen ist. Die Auslassöffnung kann nach Ablösen bzw. Abreißen des Streifens 9 geöffnet werden. Anstelle des Klebestreifens 9 kann z. B. auch ein Kunststoffstreifen von außen so aufgeschweißt sein, dass er von Hand einfach entfernbar ist.

Zweckmäßig ist, wenn das Zwickelraumvolumen zwischen den gepressten Granulatkörnern der Werktrockenmischung 5 bis 50, insbesondere 20 bis 35 Vol.-% des Gesamtvolumens des Gebindes einnimmt, damit der Wasserzutritt zu allen Körnern nahezu ungehindert und schnell erfolgen und der Selbstmischeffekt optimal ablaufen kann, der insbesondere auch durch das Sprengmittel betrieben wird.

Der Spritzbeutel ist zweckmäßigerweise als Einwegverpackung konzipiert, insbesondere, wenn keine Kosten verursachenden Auslasstüllen vorgesehen sind. Im letzteren Fall kann eine Reinigung des Spritzbeutels und seine Wiederverwendung in Frage kommen.

Damit das Gebinde aus einem mit Presslingsgranulat aus Werktrockenmörtelmischungen befüllten und hermetisch und fest verschlossenen Spritzbeutel von einer Person gewichtsmäßig handhabbar ist und auch noch handhabbar ist, wenn Wasser zur Bildung des Frischmörtels eingefüllt worden ist, werden Spritzbeutel verwendet, die im hermetisch verschlossenen Zustand Volumina zwischen 2 und 30, insbesondere zwischen 3,3 und 20 Liter aufweisen. Dabei ist erfindungsgemäß vorgesehen, dass die Korngrößen der Werktrockenmörtelpresslinge im hermetisch und fest verschlossenen Gebinde über 1 mm liegen (gemessen als Siebrückstand) und vorzugsweise zwischen 10 und 50, insbesondere zwischen 12 und 32 mm liegen. Zudem ist zweckmäßigerweise vorgesehen, dass der Zwickelraum zwischen den Granulatkörnern der Werktrockenmörtelpresslinge zwischen 5 und 50, insbesondere zwischen 20 und 35 Vol.-% des Gesamtvolumens des verschlossenen Gebindes einnimmt, woraus resultiert, dass das in den geöffneten Spritzbeutel geschüttete Wasser beim Anmachen des Frischmörtels sehr schnell und nahezu ungehindert bis in die Spitze bzw. bis in das untere Ende gelangt und für die durch das Sprengmittel verursachte Expansion der Körner des Werktrockenmörtelgranulats ausreichend Freiraum zur Verfügung steht. Das gesamte Fassungsvermögen des geöffneten Spritzbeutels ist größer als das Füllvolumen, weil für das Verschließen an der Einfüllöffnung ausreichend Folienmaterial zur Verfügung stehen muss. Demgemäß liegt das Füllvolumen z. B. zwischen 50 und 80 Vol.-%.

Für das Anmachen des Frischmörtels wird zweckmäßigerweise so viel Wasser z. B. mit einem Mal, d. h. in einem Schüttvorgang in den geöffneten Spritzbeutel geschüttet, dass die Zwickelräume vollständig gefüllt sind. Dann wird der Spritzbeutel von Hand verschlossen und das Ende der Selbstmischreaktion abgewartet. Dabei kann - wie bereits erwähnt - der Spritzbeutel zur Unterstützung und Beschleunigung des Selbstmischvorgangs von Hand von außen geknetet werden.

Als Werktrockenmischungspresslinge werden insbesondere Presslinge verwendet, die als Sprengmittel ein mit Wasser in einem alkalischen Milieu Gas bildenden Stoff, z. B. ein Metallpulver wie Aluminiumpulver, vorzugsweise in Mengen von 0,05 bis 0,5 Gew.-% enthalten. Vorteilhaft ist, wenn als weiteres Sprengmittel ein ein alkalisches Milieu bei Wasserzutritt bildendes Sprengmittel, z. B. Branntkalk und/oder gebrannter Dolomit, z. B. in Mengen von 0,1 bis 8 Gew.-% vorhanden ist.

Vorzugsweise werden gepresste Trockenmörtelformkörper verwendet, die folgende Bestandteile aufweisen:
● mindestens ein mineralisches Bindemittel, insbesondere hydraulisches Bindemittel wie Zement und/oder Kalk und/oder Gips und/oder Hüttensandmehl und/oder Puzzolane, vorzugweise in Mengen von 10 bis 50, insbesondere von 15 bis 35 Gew.-%
● mindestens einen mineralischen Zuschlagstoff wie Gesteinssand oder Gesteinsmehl, z. B. Quarzsand und/oder Quarzmehl und/oder Kalksteinmehl und/oder Kalksteinsand und/oder andere Gesteinskörnungen, vorzugsweise in Mengen von 50 bis 90, insbesondere von 60 bis 80 Gew.-%
● mindestens ein Sprengmittel
● mindestens ein Presshilfsmittel, ggf.
● mindestens ein Zusatzmittel wie Abbinderegler und/oder Fließmittel und/oder Luftporenbildner und/oder Wasserretentionsmittel und/oder Redispersionspulver, vorzugsweise in Mengen von 0 bis 5, insbesondere von 0,05 bis 1 Gew.-%, wobei die Formkörper als Presshilfsmittel mindestens ein mineralisches poröses, relativ mürbes, trockenes Leichtzuschlagstoffgranulat aus CSH-Granulat, z. B. Porenbeton und/oder Schaumbeton und/oder expandiertem Perlit und/oder expandiertem Vermiculit und/oder Bims und/oder Blähton mit z. B. Restfeuchten von maximal 3, insbesondere maximal 1 Gew.-%, vorzugsweise in Mengen von 3 bis 50, insbesondere von 2 bis 30 Gew.-% und Korndruckfestigkeiten, gemessen nach DIN 4226-3 (Zylinderverfahren), z. B. zwischen 2 und 65 KN, insbesondere zwischen 3 und 30 KN enthalten, wobei diese Presshilfsmittel z. B . Korngrößen bis 2 mm aufweisen können.

Vorteilhaft ist, wenn die Trockenmörtelformkörper mindestens ein weiteres Presshilfsmittel enthalten, insbesondere in Form mindestens eines Schichtsilikats wie Talk und/oder Tonmineral, wie Bentonit z. B. in Mengen von 0,1 bis 10, insbesondere von 0,2 bis 5 Gew.-% und/oder insbesondere in Form mindestens eines Stearats wie Calcium- und/oder Magnesiumstearat, z. B. in Mengen von 0,1 bis 5, insbesondere von 0,2 bis 3 Gew.-%.

Ferner sind gepresste Trockenmörtelformkörper besonders geeignet aufweisend
● mindestens ein mineralisches Bindemittel, insbesondere hydraulisches Bindemittel wie Zement und/oder Kalk und/oder Gips und/oder Hüttensandmehl und/oder Puzzolane, vorzugsweise in Mengen von 10 bis 50, insbesondere von 15 bis 35 Gew.-%
● mindestens einen mineralischen Zuschlagstoff wie Gesteinssand und/oder Gesteinsmehl, z. B. Quarzsand und/oder Quarzmehl und/oder Kalksteinmehl und/oder Kalksteinsand und/oder andere Gesteinskörnungen vorzugsweise in Mengen von 50 bis 90, insbesondere von 60 bis 80 Gew.-%
● mindestens ein Sprengmittel
● mindestens ein Presshilfsmittel, ggf.
● mindestens ein Zusatzmittel wie Abbinderegler und/der Fließmittel und/oder Luftporenbildner und/oder Wasserretentionsmittel und/oder Redispersionspulver, vorzugsweise in Mengen von 0 bis 5, insbesondere von 0,05 bis 1 Gew.-%, wobei die Formkörper als Sprengmittel Branntkalk und/oder gebrannten Dolomit, insbesondere weichgebrannten Kalk mit t₆₀-Werten < 5, vorzugsweise < 3, ganz besonders < 1 Minuten, vorzugsweise in Mengen von 0,1 bis 8, insbesondere von 0,5 bis 5 Gew.-% enthalten, wobei diese Sprengmittel z. B. folgende Kornverteilungen aufweisen, ausgedrückt als Siebrückstand bzw. Siebdurchgang:
   a) als Feinkalk:
      > 0,2 mm, < 0,1 Gew.-% Rückstand
      > 0,09 mm, < 5 Gew.-%, insbesondere < 2 Gew.-% Rückstand
   b) als körniger Kalk (mit hoher Reaktivität):
      bei 6,3 mm < 5 Gew.-%, insbesondere < 1 Gew.-% Rückstand
      bei 4 mm < 20 Gew.-%, insbesondere < 10 Gew.-% Rückstand
      bei 1 mm < 20 Gew.-%, insbesondere < 10 Gew.-% Durchgang
      bei 0,5 mm < 15 Gew.-%, insbesondere < 10 Gew.-% Durchgang.

Letztere Trockenmörtelformkörper sind besonders geeignet, wenn sie als weiteres Sprengmittel einen Gas bildenden Stoff, z. B. mit Wasser Gas bildenden Stoff, z. B. ein Metallpulver wie Aluminiumpulver, in Mengen von z. B. 0,05 bis 0,5 Gew.-% enthalten.

## Patentansprüche

1. Verschlossenes, gewichtsmäßig von einer Person tragbares Gebinde aus einem handhabbaren Transportbehältnis als Verpackung, vollgefüllt mit mineralischem Baustoffmaterial in Form von vorgefertigtem, mineralischem, nur noch mit Wasser und ggf. einem Zusatzmittel anzumachenden Werktrockenmörtel als Packgut,
**dadurch gekennzeichnet, dass**
das Transportbehältnis ein mit einer hermetischen Verschließeinrichtung verschlossener wasserdichter und insbesondere auch luftdichter Spritzbeutel ist und das Packgut aus ein mit Wasser reagierendes Sprengmittel enthaltenden Press- oder Aufbaugranulatkörnern der Werktrockenmischung besteht, die im Spritzbeutel Zwickelräume bilden.

2. Gebinde nach Anspruch 1,
**dadurch gekennzeichnet, dass**
der Spritzbeutel der Verschlusseinrichtung gegenüberliegend einen sich verjüngenden Auslassbereich für seine Entleerung aufweist und aus kollabierbarer, insbesondere durchsichtiger Kunststofffolie besteht.

3. Gebinde nach Anspruch 1 und/oder 2,
**dadurch gekennzeichnet, dass**
die Gebindevolumina zwischen 2 und 30, insbesondere zwischen 3,3 und 20 Liter betragen.

4. Gebinde nach einem der Ansprüche 1 bis 3,
**dadurch gekennzeichnet, dass**
das Zwickelraumvolumen zwischen den gepressten Körnern der Werktrockenmörtelmischung 5 bis 50, insbesondere 20 bis 35 Vol.-% des Gesamtvolumens des Gebindes einnimmt.

5. Gebinde nach einem oder mehreren der Ansprüche 1 bis 4,
**dadurch gekennzeichnet, dass**
die Korngrößen der Werktrockenmörtelpresslinge im hermetisch geschlossenen Gebinde über 1 mm, insbesondere zwischen 10 und 50, vorzugsweise zwischen 12 und 32 mm liegen.

6. Gebinde nach einem oder mehreren der Ansprüche 1 bis 5,
**dadurch gekennzeichnet, dass**
der Spritzbeutel zumindest in seinem Auslassbereich die Raumform einer Spitztüte hat.

7. Gebinde nach einem oder mehreren der Ansprüche 1 bis 5,
**dadurch gekennzeichnet, dass**
der Spritzbeutel zumindest in seinem Auslassbereich die Raumform eines Kegels, eines Keiles oder einer Spitzpyramide aufweist.

8. Gebinde nach einem oder mehreren der Ansprüche 1 bis 7,
**dadurch gekennzeichnet, dass**
der Auslaufbereich des Spritzbeutels mindestens eine vorzugsweise mit einem lösbaren Streifen, z. B. einem Klebestreifen abgedeckte Öffnung, eine Tülle oder eine Düse, insbesondere eine verschließbare Tülle oder verschließbare Düse aufweist.

9. Gebinde nach einem oder mehreren der Ansprüche 1 bis 8,
**dadurch gekennzeichnet, dass**
die hermetische Verschlusseinrichtung aus aufeinander gefalteten oder aufeinander geschlagenen oder aufgerollten und mit einander verklebten oder verschweißten Spritzbeutelwandungspartien eines Einfüllöffnungsbereichs des Spritzbeutels gebildet ist.

10. Gebinde nach einem oder mehreren der Ansprüche 1 bis 9,
**dadurch gekennzeichnet, dass**
es gepresste Trockenmörtelformkörper enthält, die aufweisen
- mindestens ein mineralisches Bindemittel, insbesondere hydraulisches Bindemittel wie Zement und/oder Kalk und/oder Gips und/oder Hüttensandmehl und/oder Puzzolanen, vorzugsweise in Mengen von 10 bis 50, insbesondere von 15 bis 35 Gew.-%
- mindestens einen mineralischen Zuschlagstoff wie Gesteinssand und/oder Gesteinsmehl z. B. Quarzsand und/oder Quarzmehl und/oder Kalksteinmehl und/oder Kalksteinsand und/oder andere Gesteinskörnungen, vorzugsweise in Mengen von 50 bis 90, insbesondere von 60 bis 80 Gew.-%
- mindestens ein Sprengmittel
- mindestens ein Presshilfsmittel
- gegebenenfalls mindestens ein Zusatzmittel wie Abbinderegler und/oder Fließmittel und/oder Luftporenbildner, Wasserretentionsmittel und/oder Redispersionspulver, vorzugsweise in Mengen von 0 - 5, insbesondere von 0,05 bis 1 Gew.-%,
wobei
die Formkörper als Presshilfsmittel mindestens ein mineralisches, poröses, relativ mürbes, trockenes Leichtzuschlagstoffgranulat aus CSH-Granulat, z. B. Porenbeton und/oder Schaumbeton und/oder expandierten Perlit und/oder expandiertem Vermiculit und/oder Bims und/oder Blähton mit z. B. Restfeuchten von maximal 3, insbesondere maximal 1 Gew.-%, vorzugsweise in Mengen von 3 bis 50, insbesondere von 2 bis 30 Gew.-% und Korndruckfestigkeiten, gemessen nach DIN 4226-3 (Zylinderverfahren), z. B. zwischen 2 und 65 KN, insbesondere zwischen 3 und 30 KN, enthalten, wobei diese Presshilfsmittel z. B. Korngrößen bis 2 mm aufweisen können.

11. Gebinde nach Anspruch 10,
**dadurch gekennzeichnet, dass**
sie mindestens ein weiteres Presshilfsmittel enthalten, insbesondere in Form mindestens eines Schichtsilikats wie Talk und/oder Tonmineral, wie Bentonit, z. B. in Mengen von 0,1 bis 10, insbesondere von 0,2 bis 5 Gew.-% und/oder insbesondere in Form mindestes eines Stearats wie Calcium- und/oder Magnesiumstearat z. B. in Mengen von 0,1 bis 5, insbesondere von 0,2 bis 3 Gew.-%.

12. Gebinde nach einem oder mehreren der Ansprüche 1 bis 11,
**dadurch gekennzeichnet, dass**
es Trockenmörtelformkörper enthält, die folgende Bestandteile aufweisen:
- mindestens ein mineralisches Bindemittel, insbesondere hydraulisches Bindemittel wie Zement und/oder Kalk und/oder Gips und/oder Hüttensandmehl und/oder Puzzolane, vorzugsweise in Mengen von 10 bis 50, insbesondere von 15 bis 35 Gew.-%
- mindestens einen mineralischen Zuschlagstoff wie Gesteinssand und/oder Gesteinsmehl z. B. Quarzsand und/oder Quarzmehl und/oder Kalksteinmehl und/oder Kalksteinsand und/oder andere Gesteinskörnungen, vorzugsweise in Mengen von 50 bis 90, insbesondere von 60 bis 80 Gew.-%
- mindestens ein Sprengmittel
- mindestens ein Presshilfsmittel
- gegebenenfalls mindestens ein Zusatzmittel wie Abbinderegler und/oder Fließmittel und/oder Luftporenbildner, Wasserretentionsmittel und/oder Redispersionspulver, vorzugsweise in Mengen von 0 - 5, insbesondere von 0,05 bis 1 Gew.-%,
wobei
die Formkörper als Sprengmittel Branntkalk und/oder gebrannten Dolomit, insbesondere weich gebrannten Kalk mit t₆₀-Werten < 5, vorzugsweise < 3, ganz besonders < 1 Minuten, vorzugsweise in Mengen von 0,1 bis 8, insbesondere von 0,5 bis 5 Gew.-% enthalten, wobei diese Sprengmittel z. B. folgende Kornverteilungen aufweisen, ausgedrückt als Siebrückstand bzw. Siebdurchgang:
a) als Feinkalk:
| | |
|---|---|
| > 0,2 mm | < 0,1 Gew.-% Rückstand |
| > 0,09 mm | < 5 Gew.-%, insbesondere < 2 Gew.-% Rückstand |
b) als körniger Kalk (mit hoher Reaktivität):
| | |
|---|---|
| bei 6,3 mm | < 5 Gew.-%, insbesondere < 1 Gew.-% Rückstand |
| bei 4 mm | < 20 Gew.-%, insbesondere < 10 Gew.-% Rückstand |
| bei 1 mm | < 20 Gew.-%, insbesondere < 10 Gew.-% Durchgang |
| bei 0,5 mm | < 15 Gew.-%, insbesondere < 10 Gew.-% Durchgang. |

13. Gebinde nach einem oder mehreren der Ansprüche 1 bis 12,
**dadurch gekennzeichnet, dass**
die Trockenmörtelformkörper als Sprengmittel oder als ein weiteres Sprengmittel einen mit Wasser in einem alkalischen Milieu Gas bildenden Stoff, z. B. ein Metallpulver wie Aluminiumpulver z. B. in Mengen von 0,05 bis 0,5 Gew.-% enthalten.

14. Verfahren zur Herstellung eines Frischmörtelauftrags auf einen Baukörper unter Verwendung eines Gebindes nach einem oder mehreren der Ansprüche 1 bis 13,
**dadurch gekennzeichnet, dass**
zunächst ein Frischmörtel im Spritzbeutel hergestellt wird, indem der Spritzbeutel durch Öffnung seiner Verschlusseinrichtung geöffnet wird, so dass eine Einfüllöffnung gebildet wird, sodann die Zwickelräume zwischen den Körnern der Werktrockenmörtelpresslinge über die Einfüllöffnung mit Wasser gefüllt werden, daraufhin der Spritzbeutel mit Wandungsmaterial des Öffnungsbereichs von Hand verschlossen und der Selbstmischvorgang zum Frischmörtel abgewartet wird, schließlich ein Auslass im Auslassbereich des Spritzbeutels geschaffen oder eine vorhandene Auslasseinrichtung geöffnet wird und der Frischmörtel von Hand aus den dabei kollabierenden Spritzbeutel gepresst wird.

15. Verfahren nach Anspruch 14,
**dadurch gekennzeichnet, dass**
nach dem Verschließen des Spritzbeutels der Spritzbeutel mit Inhalt von außen von Hand geknetet wird.

16. Verfahren nach Anspruch 14 und/oder 15,
**dadurch gekennzeichnet, dass**
der Auslass durch Kappung des unteren Teils des Auslassbereichs des Spritzbeutels gebildet wird.
